# EUROPEAN PATENT SPECIFICATION

(11) **EP 0 521 609 B1**
(45) Date of publication and mention of the grant of the patent: **02.04.1997**
(21) Application number: 92304670.0
(22) Date of filing: 22.05.1992
(51) Int. Cl.: H04Q 7/20, H04M 1/72

(54) **Radio phone composable of separate modules**
Funktelefon aus getrennten Modulen
Radiotéléphone constitué de modules séparés

(30) Priority: 30.05.1991 FI 912605
(43) Date of publication of application: 07.01.1993
(73) Proprietor: NOKIA MOBILE PHONES LTD., 24101 Salo (FI)
(72) Inventor: Kuisma, Erkki, SF-24800 Halikko (FI)
(74) Representative: Frain, Timothy John

(56) References cited:
- EP-A- 0 219 559
- EP-A- 0 399 176
- US-A- 4 802 235
- US-A- 4 887 311
- PHILIPS TELECOMMUNICATION REVIEW vol. 42, no. 2, June 1984, Hilversum, NL, pp. 49-62; Q. RENNI, J.R. LANGE: "PFX, a new universal portable"
- ERICSSON REVIEW vol. 60, no. 3, 1983, Stockholm, SE, pp. 151-158; C. ANDREN, L. GRANELL: 'Mobile Radio System C600'
- NACHRICHTEN ELEKTRONIK UND TELEMATIK vol. 38, no. 4, April 1984, Heidelberg, DE, pp. 134-137; S. RECKLIES: 'Handsprechfunkgeräte für den Weltmarkt'

## Description

The present invention relates to a radio phone composable of separate modules, comprising a basic module and at least one additional module detachably plugged thereto.

### BACKGROUND OF THE INVENTION

The subscriber numbers of mobile phone networks increase strongly every year; consequently, the capacity of analogue mobile phones is coming to an end in several countries in the course of the next few years. In addition, the analogue networks are frequently national. In order to solve the problems related to capacity and internationality, a general European GSM mobile phone network is being implemented. The GSM network is the first fully digital mobile phone network. Digital mobile phone networks are being established also in the US.

Installing new digital networks takes several years. Starting of a GSM network will begin in capitals and will gradually spread to form a network which covers the whole Europe. In the transition period, an existing analogue mobile phone network operating in the same frequency range can be used in parallel with the new digital network. Analogue networks operating in Europe in the same frequency range include NMT-900 in the Nordic countries and TACS in Britain. In the USA, the analogue AMPS network operates in the same frequency range, and the coming digital CDMA network as well as the dual-mode network.

In the analogue network the mobile phone receives and transmits an analogue signal; respectively, in the digital network, a digital signal. Thus, mobile phones provided for an analogue network cannot as such be used in digital networks of the same frequency range, and vice versa. Transition into new digital networks is almost indispensable since the analogue networks are overloaded. On the other hand, the new network is not very large at the very beginning, so that a parallel use together with the existing analogue networks would be desirable.

The problem of two networks can be solved in that a so-called dual-mode phone is specified which is able to operate both as a digital and an analogue phone. The dual-mode phone selects automatically either of the modes of operation to conform to the base station environment. For instance, in the future US dual-mode system this kind of phone is a necessity because also in digital mode, the paging channel trafficing is carried out in the channels of the AMPS system. In the digital systems as such, the dual-mode phone facilitates the transition period.

The dual-mode phone is larger in size and in weight than the single-mode phone so that it is unnecessarily bulky to carry when the user is located clearly in the range of operation of either the analogue network or the digital network. In the city centres where the analogue network is crowded, it is convenient to use the digital network, and in suburban areas where digital networks have not been initially installed, the analogue network has to be used. US-4887311-A discloses a FM mobile radio including a microprocessor for performing basic radio control functions. A plug-on options board may be attached to the radio enabling additional signalling options.

### SUMMARY OF THE INVENTION

The object of the invention is to provide an apparatus to be operable both in the form of single-mode and dual-mode phone. The phone would be operable in the current wide analogue network range in the form of a small-sized analogue phone, and in a crowded city area in the form of a small digital phone. It is expedient to use the phone as a dual-mode phone in areas in which the analogue and the digital networks overlap and when moving somewhat across a borderline of one of the networks into an area of another network because the phone automatically picks the mode of operation according to the services available. For instance, when moving beyond the coverage area of the digital network to an area where an analogue network already exists, the phone automatically shifts to the analogue mode of operation.

According to the present invention there is provided a radio telephone capable of dual-mode operation, comprising a basic module including circuitry common to the operation of the telephone in both modes, a first supplementary module including circuitry for processing signals characteristic of a first mode of operation, and a second supplementary module including circuitry for processing signals characteristic of a second mode of operation, wherein at least one of the first and second supplementary modules may be detachable coupled to the basic module such that the telephone is operable in the first and/or second modes according to which of the first and second supplementary modules is coupled to the basic module.

A telephone in accordance with the invention is thus operable in a first mode when the first supplementary module is in place, and in a second mode when the second subsidiary module is in place. A dual-mode of operation is possible if both the supplementary modules are present.

The first mode may correspond to an analoque mode or operation and the second mode to a digital mode of operation. Alternatively, the two modes of operation may relate respectively to different digital systems, e.g. a time division multiple access (TDMA) system and a code division multiple access system (CDMA).

In the dual digital mode embodiment the first supplementary module includes circuitry for processing digital signals associated with a first radio telephone system, and the second supplementary module includes circuitry for processing digital signals associated with a second radio telephone system.

In the analogue-digital dual-mode embodiment the first supplementary module includes circuitry for processing analogue signals associated with an analogue radio telephone system, and the second supplementary module includes circuitry for processing digital signals associated with a digital radio telephone system.

One of the supplementary modules may be provided integrally with said basic module. In this case the dual-mode of operation is enabled by attaching the other supplementary module to the basic module.

Alternatively, both said first and second supplementary modules respectively may be detachably coupled to the basic module. In this case either mode of operation may be enabled by attachment of the corresponding supplementary module. Suitably, one of the supplementary modules may be detachably coupled to the other supplementary module so that when both supplementary modules are attached, dual-mode operation is enabled.

Thus it can be seen that a telephone in accordance with the present invention offers maximum flexibility in view of the different telephone systems available, wherein the user can render the telephone operable on a particular system by attaching the appropriate supplementary unit to the basic module of the telephone.

### BRIEF DESCRIPTION OF THE DRAWINGS

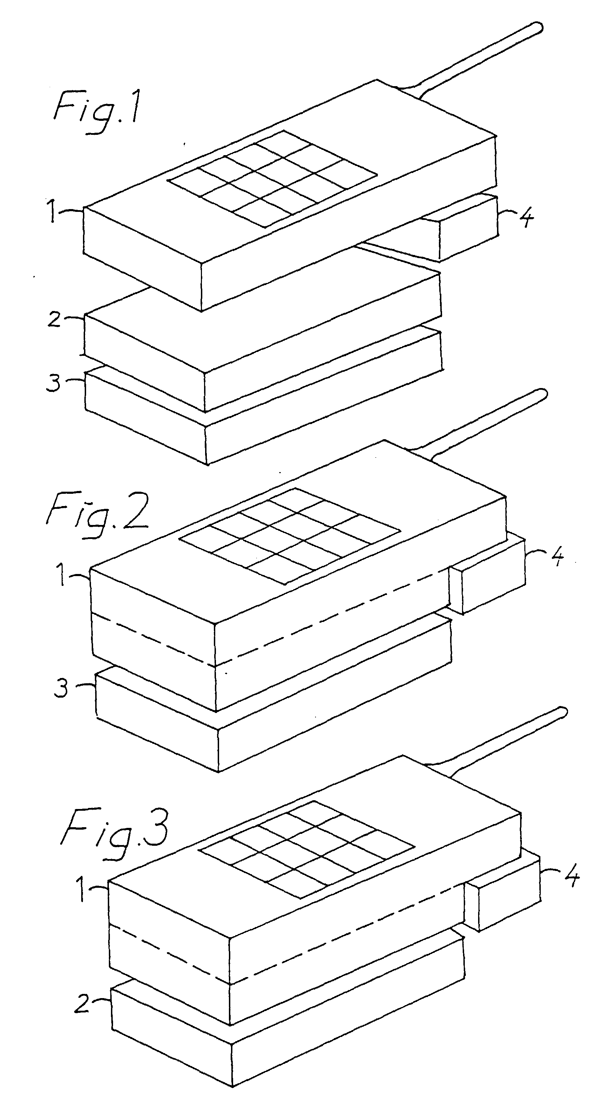

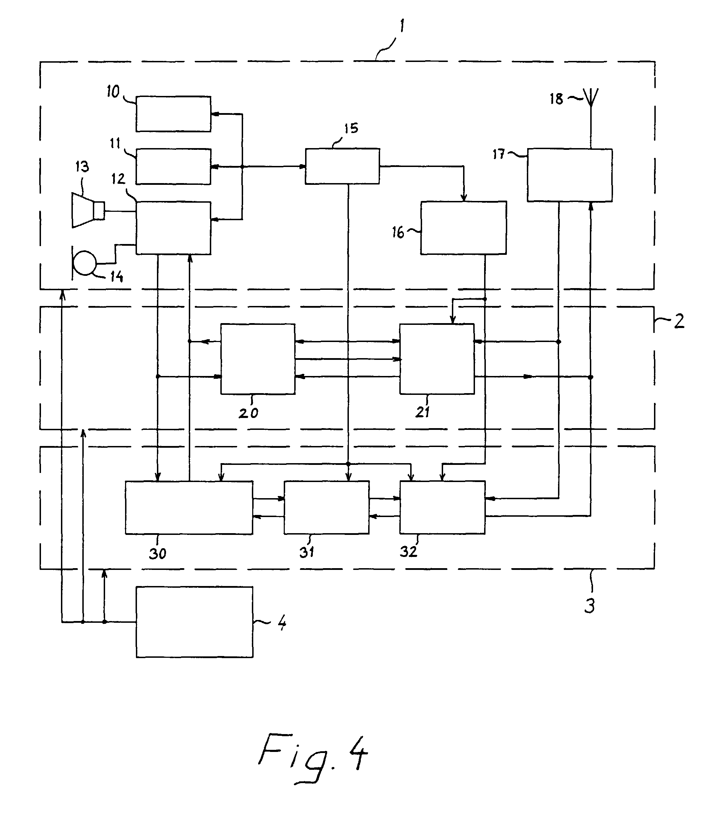

The invention is described more in detail in Figures 1, 2 and 3 which according to the invention present schematically various embodiments of the mobile phone composed of separate modules. Also Figure 4 shows more in detail the contents of the separate modules.

### DETAILED DESCRIPTION OF THE PREFERRED EMBODIMENTS

Figure 1 demonstrates according to the invention a structural example of a mobile phone composed of separate modules. The phone includes a basic module 1, a first additional module 2, a second additional module 3, and a battery 4. The basic module 1 includes at least the components and functions which are common to phones operating both in analogue and digital mode, such as a keypad, a display and their control electronics, a microphone, an earpiece, audio amplifiers, an antenna, a duplex filter, a microprocessor, and a potential subscriber identity module (SIM). The first additional module 2 includes the main part of the circuits required in transmitting and receiving an analogue signal, such as the RF and IF components for the analogue receiver, an analogue transmitter, and a modem transmitting and receiving analogue signal data. The second additional module 3 includes the main part of the circuits required in transmitting and receiving a digital signal, such as the RF and IF components for the digital receiver, a digital transmitter, and other digital signal processing components characteristic for digital operation, such as a demodulator, an equalizer, a digital modulator, an encoder and a decoder of the traffic and control channel, a speech encoder, and an echo suppressor. Part of the above-mentioned operations and circuits of the additional components may also be included in the basic module if they can be common to the analogue and digital modes. For instance, the synthesizer in the RF components can be included in the basic module. The basic module may also include parts, the mode of operation of which can be shifted to conform to the mode which is being in operation. For instance, the transmitter can be constructed to act in conformance with the requirements of either the analogue or the digital operation. In other words, the list of the operations including different components is not binding and the contents and functions of the different modules have been described more in detail in association with Figure 4. In addition, the phone includes a battery 4 which can be a separate additional module or it may be included fixedly in the basic module 1, in the first additional module 2, or in the second additional module 3.

In Figure 2 the first additional module 2 is fixedly included in the basic module 1, whereby the basic module operates as an analogue phone. The second additional module 3 can be plugged separately to the phone, whereby the phone operates as a dual-mode phone. In addition, the phone includes a battery 4 which can be a separate additional module or be included fixedly in the basic module 1 or in the second additional module 3.

In Figure 3, the second additional module 3 is fixedly included in the basic module 1, whereby the basic module operates as a digital phone. The first additional module 2 may be attached separately to the phone, whereby the phone operates as the dual-mode phone. In addition, the phone includes a battery 4 which can be a separate additional module or be included fixedly in the basic module 1 or in the first additional module 2.

Figure 4 shows more in detail the contents of the modules 1, 2 and 3. As earlier mentioned the basic module 1 includes components and functions, which are common for analogue as well as digital mode telephones. One of these components and functions is the Subscriber Identity Module (SIM), which is a smart card, which includes the actual telephone number and is optional so that the telephone number is included in the basic module when the usage of a SIM is not wanted. By connecting the SIM card to the mobile telephone (Mobile Equipment) it is activated and can be used as a Mobile Station. Other components and functions included in the basic module are the display, keyboard and their control logic, which all are included here in block 11, and the audio amplifiers 12, the earpiece or speaker 13, and the microphone 14. The central component of the basic module is block 15 including the microprocessor and control logic of the telephone. The control block 15 is in a bidirectional connection to the SIM 10, the interface 11 and the audio amplifiers 12, which controls the speaker 13 and the microphone 14. The microprocessor 15 also controls the synthesizer 16, which generates frequencies needed by the RF-components 21, 32 in the additional modules 2, 3 for transferring the intermediate frequency (IF) signals to transmission frequency and the received signals to an intermediate frequency (IF). The basic module 1 also includes a duplex filter 17, which is connected to the antenna 18 and leads the received signals to the receiver without disturbing the transmitter and leads the transmission signals from the transmitter to the antenna 18 without causing disturbances on the receiver.

The first additional module 2, the analogue module, includes the majority of the components needed for reception and transmission of an analogue signal, i.e. components for processing an analogue signal. Among these components are the IF parts 20 of the analogue receiver, which parts include a modem for transmission and reception of analogue signal data between the audio amplifiers 12 and an RF block 21. The analogue module 2 also includes analogue receiver RF parts and an analogue transmitter, both included in the figure in block 21 and are connected to the IF parts 20 for reception therefrom of an IF signal to be converted to transmission frequency in block 21 as well as for transferring and converting a received signal to an intermediate frequency to the IF parts 20. The RF block 21 receives the mixing frequencies from the synthesizer 16 in the basic module 1 and the RF block 21 is also connected to the duplex filter 17 for transmission and reception therethrough.

The second additional module 3, the digital module, includes the majority of the components needed for reception and transmission of a digital signal, i.e. components for processing a digital signal. Among these components are the IF parts 31 of the digital receiver, which parts include an equalizer and a modem for transmission and reception of digital signal data between a digital baseband block 30 and an RF block 32. The digital module 3 also includes digital receiver RF parts and a digital transmitter, both included in the figure in block 32 and are connected to the IF parts 31 for reception therefrom of an IF signal to be converted to transmission frequency in block 32 as well as for transferring and converting a received signal to an intermediate frequency to the IF parts 31. The RF block 32 receives the mixing frequencies from the synthesizer 16 in the base module 1 and the RF block 32 is also connected to the duplex filter 17 for transmission and reception therethrough. The digital module 3 comprises a digital baseband block 30, which includes digital signal processing components for the functions which are specific for digital operation such as an encoder and a decoder for the speech and control channels, and an echo suppressor, which might as well be included in the audio amplifier block 12 in the basic module 1. All three digital blocks 30, 31, 32 are controlled by the microprocessor 15 in the basic module 1.

A battery 4, which may be separate or part of any of the modules 1, 2, 3, generates the supply voltages for the components of each module. The arrangement explained above can be varied. The RF blocks 21, 32, for example, may be included in the basic module 1. Also both the analogue 2 as well as the digital module 3 may have own microprocessors.

As taught by the invention, a radio phone composed of separate modules can be turned into a single-mode or a dual-mode phone by plugging thereto a separate replaceable first additional module and/or a second additional module. The phone is small in size when only one mode of operation is needed, but it is also utilizable in a dual-mode network or in an analogue and digital network operating in one and the same frequency range in that a separate first additional module or a second additional module is plugged thereto. The telephone gives the user a freedom to select which of the separate modules he wishes to acquire in addition to the basic module, and the user may choose between different combinations according to his/her own needs.

The means of the invention may therefore be used in two modes and the separate analogue and digital modules are less costly than two separate phones.

Also, as mentioned above, the invention is applicable to a telephone operable in two different digital modes, e.g. a time division multiple access (TDMA) system and a code division multiple access system (CDMA).

## Claims

1. A radio telephone capable of dual-mode operation, comprising
a basic module (1) including circuitry common to the operation of the telephone in both modes,
a first supplementary module (2) including circuitry for processing signals characteristic of a first mode of operation, and
a second supplementary module (3) including circuitry for processing signals characteristic of a second mode of operation,
wherein at least one of the first and second supplementary modules may be detachably coupled to the basic module such that the telephone is operable in the first and/or second modes according to which of the first and second supplementary modules is coupled to the basic module.

2. A radio telephone as claimed in claim 1, wherein the first supplementary module includes circuitry for processing digital signals associated with a first radio telephone system, and the second supplementary module includes circuitry for processing digital signals associated with a second radio telephone system.

3. A radio telephone as claimed in claim 2, wherein the first supplementary module comprises RF and IF components of a digital receiver, a digital transmitter, and other digital signal processing means.

4. A radio telephone as claimed in claim 1, wherein the first supplementary module includes circuitry for processing analogue signals associated with an analogue radio telephone system, and the second supplementary module includes circuitry for processing digital signals associated with a digital radio telephone system.

5. A radio telephone as claimed in claim 4, wherein the first supplementary module comprises RF and IF components of an analogue receiver, an analogue transmitter, and a modem transmitting and receiving analogue signal data.

6. A radio telephone as claimed in any of the preceding claims, wherein the basic module comprises a keypad, a display, a microphone, an earpiece, audio amplifiers, an antenna, duplex filtering means, and a microprocessor for controlling the functions of the telephone.

7. A radio telephone as claimed in any of the preceding claims, wherein the second supplementary module comprises RF and IF components of a digital receiver, a digital transmitter, a demodulator, an equalizer, a digital modulator, an encoder and a decoder for the traffic and control channels, a speech encoder, and an echo suppressor.

8. A radio telephone as claimed in any of the preceding claims, wherein one of the supplementary modules is provided integrally with said basic module.

9. A radio telephone as claimed in any of claims 1 to 7, wherein both said first and second supplementary modules respectively may be detachably coupled to the basic module.

10. A radio telephone as claimed in any of the preceding claims, wherein one of the supplementary modules may be detachably coupled to the other supplementary module.

## Patentansprüche

1. Funktelefon für einen dualen Betrieb mit:
einem Basismodul (1) mit einer Schaltungsanordnung für den Betrieb des Telefons in beiden Modi,
einem ersten Zusatzmodul (2) mit einer Schaltungsanordnung, um Signale zu verarbeiten, die charakteristisch für einen ersten Betriebsmodus sind, und
einem zweiten Zusatzmodul (3) mit einer Schaltungsanordnung, um Signale zu verarbeiten, die charakteristisch für einen zweiten Betriebsmodus sind, wobei wenigstens eines der ersten und zweiten Zusatzmodule mit dem Basismodul abnehmbar gekoppelt ist, um das Telefon im ersten und/oder zweiten Modus zu betreiben, und zwar in Abhängigkeit davon, welches der ersten und zweiten Zusatzmodule mit dem Basismodul gekoppelt ist.

2. Funktelefon nach Anspruch 1, bei dem das erste Zusatzmodul eine Schaltungsanordnung enthält, um mit einem ersten Funktelefonsystem assoziierte digitale Signale zu verarbeiten, und das zweite Zusatzmodul eine Schaltungsanordnung enthält, um mit einem zweiten Funktelefonsystem assoziierte digitale Signale zu verarbeiten.

3. Funktelefon nach Anspruch 2, bei dem das erste Zusatzmodul RF- und IF-Komponenten eines digitalen Empfängers, eines digitalen Senders und anderer digitaler signalverarbeitender Mittel enthält.

4. Funktelefon nach Anspruch 1, bei dem das erste Zusatzmodul eine Schaltungsanordnung enthält, um mit einem analogen Funktelefonsystem assoziierte analoge Signale zu verarbeiten, und das zweite Zusatzmodul eine Schaltungsanordnung enthält, um mit einem digitalen Funktelefonsystem assoziierte digitale Signale zu verarbeiten.

5. Funktelefon nach Anspruch 4, bei dem das erste Zusatzmodul RF- und IF-Komponenten eines analogen Empfängers, eines analogen Senders und eines Modems, das analoge Daten sendet und empfängt, enthält.

6. Funktelefon nach irgendeinem der vorangegangenen Ansprüche, bei dem das Basismodul eine Tastenkonsole, eine Anzeige, ein Mikrophon, einen Hörer, Audioverstärker, eine Antenne, Duplexfiltermittel und einen Mikroprozessor zur Steuerung der Funktionen des Telefons enhält.

7. Funktelefon nach irgendeinem der vorangegangenen Ansprüche, bei dem das zweite Zusatzmodul RF- und IF-Komponenten eines digitalen Empfängers, eines digitalen Senders, eines Demodulators, eines Entzerrers, eines digitalen Modulators, eines Kodierers, eines Dekoders für die Verkehrs- und Steuerkanäle, eines Sprachkodierers und einer Echosperre enthält.

8. Funktelefon nach irgendeinem der vorangegangenen Ansprüche, bei dem eines der Zusatzmodule im Basismodul integriert ist.

9. Funktelefon nach irgendeinem der Ansprüche 1 bis 7, bei dem sowohl das erste als auch das zweite Zusatzmodul jeweils mit dem Basismodul abnehmbar gekoppelt ist.

10. Funktelefon nach irgendeinem der vorangegangenen Ansprüche, bei dem eines der Zusatzmodule mit dem anderen Zusatzmodul abnehmbar gekoppelt ist.

## Revendications

1. Radiotéléphone capable d'un fonctionnement à double mode, comportant
un module de base (1) comportant des circuits communs pour le fonctionnement du téléphone dans les deux modes,
un premier module supplémentaire (2) comportant des circuits pour le traitement des signaux caractéristiques d'un premier mode de fonctionnement, et
un second module supplémentaire (3) comportant des circuits pour le traitement des signaux caractéristiques d'un second mode de fonctionnement,
dans lequel au moins l'un des premier et second modules supplémentaires peut être couplé de manière détachable au module de base de façon que le téléphone puisse fonctionner dans les premier et/ou second modes selon lesquels des premier et second modules supplémentaires sont couplés au module de base.

2. Radiotéléphone selon la revendication 1, dans lequel le premier module supplémentaire comporte des circuits pour le traitement des signaux numériques associés à un premier système de radiotéléphone, et le second module supplémentaire comporte des circuits pour le traitement des signaux numériques associés à un second système de radiotéléphone.

3. Radiotéléphone selon la revendication 2, dans lequel le premier module supplémentaire comporte des composants RF et IF d'un récepteur numérique, un transmetteur numérique, et d'autres moyens de traitement de signal numérique.

4. Radiotéléphone selon la revendication 1, dans lequel le premier module supplémentaire comporte des circuits pour le traitement des signaux analogiques associés à un système de radiotéléphone analogique, et le second module supplémentaire comporte des circuits pour le traitement des signaux numériques associés à un système de radiotéléphone numérique.

5. Radiotéléphone selon la revendication 4, dans lequel le premier module supplémentaire comporte des composants RF et IF d'un récepteur analogique, un transmetteur analogique, et un modem transmettant et recevant des données de signaux analogiques.

6. Radiotéléphone selon l'une quelconque des revendications précédentes, dans lequel le module de base comporte un clavier, un affichage, un microphone, un écouteur, des amplificateurs audio, une antenne, un moyen de filtrage en duplex, et un microprocesseur pour le contrôle des fonctions du téléphone.

7. Radiotéléphone selon l'une quelconque des revendications précédentes, dans lequel le second module supplémentaire comporte des composants RF et IF d'un récepteur numérique, un émetteur numérique, un démodulateur, un équalizeur, un modulateur numérique, un encodeur et un décodeur pour les canaux de circulation et de contrôle, un encodeur de parole, et un suppresseur d'échos.

8. Radiotéléphone selon l'une quelconque des revendications précédentes, dans lequel l'un des modules supplémentaires est prévu intégralement avec ledit module de base.

9. Radiotéléphone selon l'une quelconque des revendications 1 à 7, dans lequel les premier et second modules supplémentaires peuvent être respectivement couplés de manière détachable au module de base.

10. Radiotéléphone selon l'une quelconque des revendications précédentes, dans lequel l'un des modules supplémentaires peut être couplé de manière détachable à l'autre module supplémentaire.
